# EUROPEAN PATENT SPECIFICATION

(11) **EP 4 251 365 B1**
(45) Date of publication and mention of the grant of the patent: **16.07.2025**
(21) Application number: 21823226.2
(22) Date of filing: 26.11.2021
(51) Int. Cl.: B23K 26/00, B23K 26/046, B23K 26/352, B23K 26/362, B23K 26/402, B23K 26/70, C03C 17/36, B23K 101/18, B23K 103/16, B23K 103/00

(54) **DECOATING APPARATUS AND ASSOCIATED METHOD TO DECOAT AT LEAST PARTIALLY A PORTION OF A COATING SYSTEM PRESENTS ON A SURFACE OF A WINDOW MOUNTED IN SITU**
ENTSCHICHTUNGSVORRICHTUNG UND ZUGEHÖRIGES VERFAHREN ZUM ZUMINDEST TEILWEISEN ENTSCHICHTEN EINES TEILS EINES BESCHICHTUNGSSYSTEMS AUF EINER OBERFLÄCHE EINES VOR ORT MONTIERTEN FENSTERS
APPAREIL DE DÉCAPAGE ET PROCÉDÉ ASSOCIÉ POUR DÉCAPER AU MOINS PARTIELLEMENT UNE PARTIE D'UN SYSTÈME DE REVÊTEMENT PRÉSENT SUR UNE SURFACE D'UNE FENÊTRE MONTÉE EN SITU

(30) Priority: 30.11.2020 EP 20210608
(43) Date of publication of application: 04.10.2023
(73) Proprietor: AGC Glass Europe, 1348 Louvain-La-Neuve (BE); AGC Inc., Tokyo 100-8405 (JP); AGC Flat Glass North America, Inc., Alpharetta, 30022-1167 (US); AGC Vidros do Brasil Ltda., CEP 12523-671 Guaratinguetá, São Paulo (BR)
(72) Inventor: MORGANTE, Eric, 6041 Gosselies (BE)
(74) Representative: AGC Glass Europe
(86) International application number: PCT/EP2021/083246
(87) International publication number: WO 2022/112532

(56) References cited:
- WO-A1-2014/157313
- CN-U- 207 026 744
- DE-A1- 19 817 629
- US-A1- 2018 036 839
- US-A1- 2019 001 594
- US-A1- 2020 001 393

## Description

### Technical Field

The present invention relates to a decoating apparatus according to the preamble of claim 1 (see for example US 2018/036839 A1), and to a method to decoat at least partially a portion of a coating system presents on a surface of a window mounted in situ using such decoating apparatus, see claim 6. The window is mounted on a stationary object, for instance a building, or mounted on a mobile object, for instance a vehicle, a train.

Thus, the invention concerns multiple domains where windows including at least one coating system are used and wherein removing part of said coating system is required to improve the electromagnetic transparency.

### Background Art

A standard single-layered window has poor thermal performances. This is why most windows are now built using two or more glass panels separated by a gas and/or polymer-based interlayer. This kind of windows are is called a multi-glazed window.

A coating system is typically applied on the interface of one or several glass panels of a multi-glazed window in order to further improve the multi-glazed window properties.

This coating system can either improve the multi-glazed window insulation, reduce the amount of infrared and/or ultraviolet radiation entering the multi-glazed window and/or keep the sun's heat out of a space wherein such multi-glazed window insulation is used.

However, this type of coating systems is generally metal-based and therefore acts as a Faraday cage, preventing electromagnetic waves such as radio waves, from entering or leaving the space.

In order to improve the transmittance of a multi-glazed window containing a coating system, one can use a laser decoating system to remove at least one portion of the coating system. The total surface to be decoated is typically between 1 and 3% of the total coating system surface, in order to both improve the transmission of radio waves through the multi-glazed-window without impairing the properties of said coating system.

Preferably, to improve the transmission of a radio wave through the window, the decoating system will remove segments from the coating system and the sum of the longest sub-segment of each segment is equal to nλ/2 wherein n is a positive integer greater than zero and lambda (λ) is the wavelength of the radio wave. It is necessary to have a wide band frequency selective surface in order to ensure the transmission of waves of different frequencies through the multi-glazed window, typically between 2GHz and 100Ghz. For instance, the decoating system can be configured to remove a segment of a length greater than 400 mm and a width between 10 and 100 µm.

Preferably, for some applications such as toll communication systems, 4G and/or 5G receptors and transmitters, a small decoating portion is desired instead of a large decoating portion. For instance, a small decoating portion has typically a length less than 400 mm.

A simple approach to solve this problem of RF energy reflection is to remove a portion of the coating system. This approach, however, reduces the solar control benefits offered by the multi-glazed window. Moreover, for multi-glazed window located inside the building, the vehicle or the car, the decoated region would be unacceptably large. On top of that, the transition between the decoated portion and the coating itself is eye-visible and usually non-accepted by users.

Another solution has been to cut lines in the coating system to create a surface which is frequency selective: it has relatively high reflectivity/absorbance for solar energy but relatively low reflectivity/absorbance in the RF region of the electromagnetic spectrum. The cutting may be performed by laser ablation and the spacing of the slits is chosen to provide selectivity at the desired frequency.

To improve the transmittance of said multi-glazed window, WO 2015/050762 describes an apparatus comprising a laser light source and a lens array configured to focus said laser light source on a coating system of a multi-glazed window. Said apparatus is mounted on suction pads to secure said apparatus on said multi-glazed window. Said apparatus also comprises at least two motors configured to move said laser along rails along the X and Y axis. Said laser is capable of scribing a grid shape on said coating system to improve the electromagnetic transmission of said multi-glazed window.

However, said laser is always focused on a single point and cannot be adapted. In fact, this apparatus is only built to have a focal point in a specific surface and thus such apparatus are built for a single type of double-glazed window being two glass panels separated by a spacer creating a space filled with gas, where the coating system is positioned on the internal interface of the window. Hence, it is not possible to use this apparatus to other types of windows where the glass thickness is different or where the coating system is applied on a different interface.

In another domain, US6,559,411 describes an apparatus for laser scribing a tin oxide layer coated on a glass panel substrate.

A predetermined scribing is formed on the tin oxide layer by focusing a laser on said tin oxide layer and by displacing said glass panel substrate by a conveyor along the X or Y axis. Moreover, the position of the laser is adjusted in the Z direction during the laser scribing to maintain the focusing on said tin oxide layer.

However, this focusing requires a precise and complete understanding of the glass panel substrate including the thickness of each layer and the position of said tin oxide layer as well as the knowledge of the exact distance between the conveyor and the laser.

Laser beam of prior art is always placed and fixed orthogonally to the surface to be decoated.

Moreover, systems described in prior art are heavy to mount on a multi-glazed window due to displacement elements (rails,...) and motors. The precision and the quality are hence not appropriate for small decoating portions due to movements of the apparatus. The decoating time is also long due to displacements of the laser light source especially for small decoating portion where many small displacements are needed within a short distance.

Thus, this apparatus can only be used in factories on glass panel that have just been manufactured. Hence, this apparatus cannot be used on a multi-glazed window of unknown structure, such as the number of glass panels, the number of lamination layers, the numbers of spacers, the number, nature and position of the coating system, ... and that is already mounted on an object, for instance a building or a vehicle.

In addition, a large number of windows are already installed and are known to prevent the transmission of electromagnetic wave. Such windows cannot be replaced or be replaced without important costs . The multi-glazed windows cannot be retrieved from the object, sent back to a factory to remove the part of the coating and then, sent back to be assembled again on the object. Such situations require the decoating process to be carried out in situ, when the multi-glazed window is mounted on the object. In most cases, the structure of these multi-glazed windows and the exact position of their coating system is completely unknown. It is therefore impossible for such apparatus to focus the laser properly on the coating system.

On top of that, when apparatus of the prior art are mounted on a multi-glazed window, the tolerances of manufacture, the variability of mounting system occurs a variability of the distance between the coated surface and the decoating apparatus. Such variability implies that the focal point of the laser beam is not focused on the coated surface. The decoating of such apparatus of the prior art is not efficient, the laser beam being not focused at the right position.

Hence, the ongoing technical issue is to obtain a decoating apparatus and process that can be used on multiple kind of multi-glazed windows, wherein the position and the thickness of the glass panels and the position of the at least one coating system are not known; and that are able to work when said multi-glazed window is already mounted on an object.

### Summary of invention

It is an object of the present invention to alleviate these problems, and to provide a compact and easy to handle decoating apparatus to decoat at least partially a portion of a coating system presents on a surface of the multi-glazed window mounted in situ.

In a first aspect of the present invention, a decoating apparatus is defined in claim 1, being inscribed in a parallelepiped rectangle R defined by a longitudinal axis, X, a vertical axis, Y defining a plane P and a lateral axis, Z, comprising a mounting means to mount the decoating apparatus on a window, preferably a multi-glazed window, mounted in situ, meaning mounted on a stationary object, such as a building, or on a mobile object, such as a vehicle, a train,... The decoating apparatus further comprises a laser device to decoat at least partially a portion of a coating system presents on a surface of the multi-glazed window. The laser device comprises a fixed part, irremovable in the decoating apparatus in directions paralleled to plane P and along the lateral axis Z, comprising a laser generator to generate a laser beam. Preferably, the frequency of the laser beam equals to or is higher than substantially 20kHz.

The solution as defined in the first aspect of the present invention is based on the laser device comprises a mobile part comprising a focal lens to produce a focal point of the laser beam at a defined distance Df from the focal lens.

Apparatus of the prior art cannot be focused then, to adapt such apparatus to a new configuration of window, the whole laser device has to be changed.

The present invention permits to adapt the focal lens to the configuration of the window to treat while not changing the laser device.

Further preferred embodiments of this first aspect of the present invention are defined in the dependent claims.

In a second aspect of the present invention, a method to decoat at least partially a portion of a coating system presents on a surface of a window mounted in situ by a decoating apparatus according to the first aspect of the present invention is defined in claim 6. The method comprises the following steps :
A. Mounting the decoating apparatus in front of the portion to be decoated;
B. At least partially decoating the portion to be decoated with the laser beam;
C. Unmounting the decoating apparatus.

It is noted that the invention relates to all possible combinations of features recited in the claims or in the described embodiments.

The following description relates to building applications but it's understood that the invention may be applicable to others fields like automotive or transportation applications.

### Brief description of the drawings

This and other aspects of the present invention will now be described in more detail, with reference to the appended drawings showing various exemplifying embodiments of the invention which are provided by way of illustration and not of limitation. The drawings are a schematic representation and not true to scale. The drawings do not restrict the invention in any way. More advantages will be explained with examples.
FIG. 1 is a schematic view of one embodiment of a decoating apparatus according to the invention.
FIG. 2 is a schematic view of one embodiment of a decoating apparatus according to the invention.
FIG. 3 is a schematic view of one embodiment of a decoating apparatus according to the invention.
FIG. 4 is a sectional view in 3D of a decoating apparatus according to the present invention.

### Detailed description

It is an object of the present invention to alleviate the above described problems and to improve and minimize the number of needed compounds for feeding an laminated assembly. Especially, the object of the first aspect of the present invention is to improve the connection inside a laminated assembly.

In the following description, unless otherwise specified, expression "substantially" mean to within 10%, preferably to within 5%.

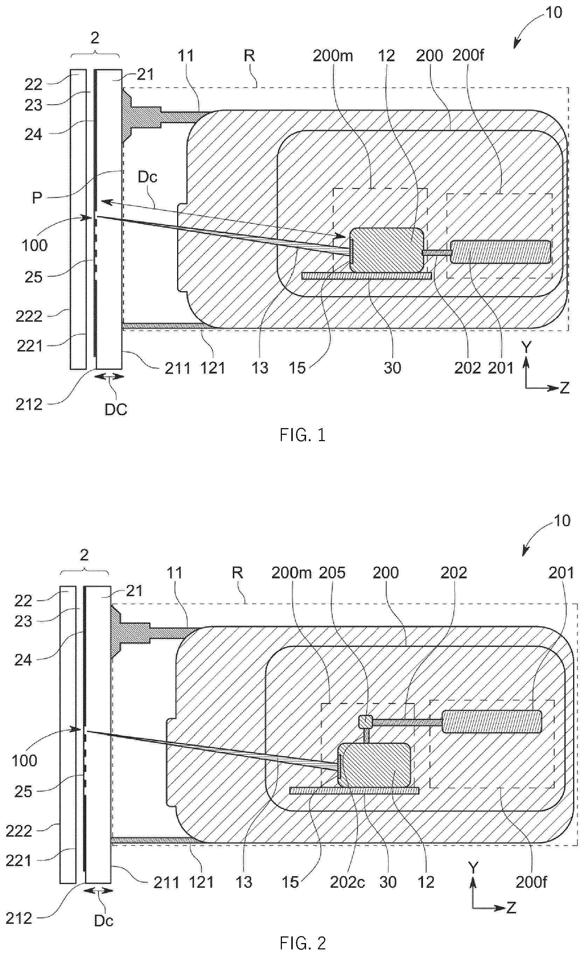

According to one embodiment of the first aspect of the invention and, as illustrated by FIG. 1, a decoating apparatus 10 inscribed in a parallelepiped rectangle R defined by a longitudinal axis, X, a vertical axis, Y defining a plane P and a lateral axis, Z.

The decoating apparatus comprises a mounting means 11 to mount the decoating apparatus on a window 2, especially a multi-glazed window, mounted in situ, meaning that the multi-glazed window is mounted on a stationary object, for instance a building, or on a mobile object, for instance a vehicle, a train.

It's understood that the invention may be applicable to single-glazed window meaning a window having a single panel.

The multi-glazed window 2 can be a multi-glazed window used as a window to close an opening of the stationary object or to close an opening of the mobile object.

The multi-glazed window 2 can be at least partially transparent to visible waves for visibility, and natural or artificial light. The multi-glazed window is made of multiple panels separated by at least one interlayer, forming multiple interfaces. The panels therefore can be separated by a space filled with gas and/or by a polymeric interlayer.

In some embodiments, the multi-glazed window 2 can comprise at least two glass panels 21, 22 separated a panel interlayer 23 creating surfaces 211, 212, 221, 222.

The panel interlayer 23 can be a spacer allowing to create a space 23 filled by a gas like Argon to improve the thermal isolation of the multi-glazed window, creating an insulating multi-glazed window. The invention is not limited to apparatus for use on multi-glazed window having two panels. The apparatus and method of the present invention are suitable for any multi-glazed window such as double, triple glazed windows.

The panel interlayer 23 can be a plastic panel interlayer to laminate the two glass panels together to reduce the noise and/or to ensure the penetration safety. The laminated glazing comprises panels maintained by one or more interlayers positioned between glass panels. The interlayers are typically polyvinyl butyral (PVB) or ethylene-vinyl acetate (EVA) for which the stiffness can be tuned. These interlayers keep the glass panels bonded together even when broken in such a way that they prevent the glass from breaking up into large sharp pieces.

Said panels can be comprises one or more glass sheets. Said glass sheets of can be made of glass, polycarbonate, PVC or any other material used for a window mounted on a stationary object or on a mobile object.

Usually, the material of the panels of multi-glazed window 2 is, for example, soda-lime silica glass, borosilicate glass, aluminosilicate glass or other materials such as thermoplastic polymers or polycarbonates which are especially known for automotive applications. References to glass throughout this application should not be regarded as limiting.

The multi-glazed window 2 can be manufactured by a known manufacturing method such as a float method, a fusion method, a redraw method, a press molding method, or a pulling method. As a manufacturing method of the multi-glazed window, from the viewpoint of productivity and cost, it is preferable to use the float method.

Each panel or glass sheet can be independently processed and/or colored,... and/or have different thickness in order to improve the aesthetic, thermal insulation performances, safety,... The thickness of the multi-glazed window is set according to requirements of applications.

The multi-glazed window 2 can be any known window used in situ. For example, the multi-glazed window 2 can be processed, i.e. annealed, tempered,... to respect the specifications of security and anti-thief requirements. The window can independently be a clear glass or a colored glass, tinted with a specific composition of the glass or by applying an additional coating or a plastic layer for example. The window can have any shape to fit to the opening such as a rectangular shape, in a plan view by using a known cutting method. As a method of cutting the multi-glazed window, for example, a method in which laser light is irradiated on the surface of the multi-glazed window to cut the multi-glazed window, or a method in which a cutter wheel is mechanically cutting can be used. The multi-glazed window can have any shape in order to fit with the application, for example a windshield, a sidelite, a sunroof of an automotive, a lateral glazing of a train, a window of a building,...

The shape of the multi-glazed window in a plan view is usually a rectangle. Depending of the application, the shape is not limited to a rectangle and may be a trapeze, especially for a windshield or a backlite of a vehicle, a triangle, especially for a sidelight of a vehicle, a circle or any other shape able to close an opening made on a stationary object or on a mobile object.

In addition, the multi-glazed window can be assembled within a frame or be mounted in a double skin façade, in a carbody or any other means able to maintain a multi-glazed window. Some plastics elements can be fixed on the multi-glazed window to ensure the tightness to gas and/or liquid, to ensure the fixation of the multi-glazed window or to add external element to the multi-glazed window. In some embodiments, a masking element, such as an enamel layer, can be added on part of the periphery of the multi-glazed window.

Preferably, the decoating apparatus is mounted on the external surface **211** of the window **2.** The decoating apparatus can be mounted on the frame of the multi-glazed window or on the border of the multi-glazed window instead of mounted on the external surface depending on the application and the situation of the window on the stationary or mobile object.

At least one coating system 24 is present on one interface, meaning on one surface **211, 212, 221, 222** of the window **2.**

Preferably, the coating system is on internal surfaces **212, 221** of the multi-glazed window.

In some embodiments, the multi-glazed window can comprises more than one coating systems. Each coating system is present on a different surface of the multi-glazed window.

This coating system 24 generally uses a metal-based layer and infrared light is highly refracted by this type of layer. Such coating system 24 is typically used to achieve a to a low-energy multi-glazed window.

In some embodiment, the coating system 24 can be a heatable coating applied on the multi-glazed window to add a defrosting and/or a demisting function for example and/or to reduce the accumulation of heat in the interior of a building or vehicle or to keep the heat inside during cold periods for example. Although coating system 24 are thin and mainly transparent to eyes.

Usually, the coating system 24 is covering most of the surface of the interface of the multi-glazed window 2.

The coating system 24 can be made of layers of different materials and at least one of these layers is electrically conductive. In some embodiments, for example in automotive windshields, the coating system 24 can be electrically conductive over the majority of one major surface of the multi-glazed window. This can causes issues such as heated point if the portion **25** to be decoating is not well designed.

A suitable coating system **24** is for example, a conductive film. A suitable conductive film, is for example, a laminated film obtained by sequentially laminating a transparent dielectric, a metal film, and a transparent dielectric, ITO, fluorine-added tin oxide (FTO), or the like. A suitable metal film can be , for example, a film containing as a main component at least one selected from the group consisting of Ag, Au, Cu, and Al.

Such coating systems are low in reflectance for RF radiation meaning that RF radiation are mostly transmitted through the material. In contrast, high in reflectance for RF radiation means that RF radiation are mostly reflected on the surface of the material and/or absorbed by the material and the attenuation is at level of 20 decibels (dB) or more. Low in reflectance means an attenuation at level of 10 decibels (dB) or less. The coating system which is high in reflectance for RF radiation means that the coating system is non-transmitting to RF radiation. Typically, the coating system 24 has an emissivity of not more than 0.4, preferably equals to or less than 0.2, in particular equals to or less than 0.1, equals to or less than 0.05 or even equals to or less than 0.04.

The coating system may comprise a metal based low emissive coating system. Such coating systems typically are a system of thin layers comprising one or more, for example two, three or four, functional layers based on an infrared radiation reflecting material and at least two dielectric coatings, wherein each functional layer is surrounded by dielectric coatings. The coating system of the present invention may in particular have an emissivity of at least 0.010. The functional layers are generally layers of silver with a thickness of some nanometers, mostly about 5 to 20nm. The dielectric layers are generally transparent and made from one or more layers of metal oxides and/or nitrides. These different layers are deposited, for example, by means of vacuum deposition techniques such as magnetic field-assisted cathodic sputtering, more commonly referred to as "magnetron sputtering". In addition to the dielectric layers, each functional layer may be protected by barrier layers or improved by deposition on a wetting layer.

Moreover, if the multi-glazed window presents two coating systems applied on two different interfaces **211, 212, 221, 222,** a first coating needs to be decoated before the second one. For example, the decoating apparatus decoats a portion on the closest coating system and then decoats the second one. The focus point is adapted to be on the correct coating system. Preferably, to avoid to modify the decoating of the closest coating, the decoating apparatus decoats a portion on the farthest coating system and then decoats the closest one. The needed power to decoat the farthest one is higher than the needed power to decoat the closest one and risks to degrade the decoated shape of the portion on the closest one if this one is done before the farthest coating.

Dimensions and shape of the portion to be decoated or the decoated portion depend on the desire application. The apparatus or part of the apparatus can therefore be adapted to the dimension of the portion to be decoated.

The decoated portion can be a full decoated area meaning that the coating system is removed in this entire portion.

Alternatively, to minimize the decoating time while keeping functionalities, such as thermal performances, of the coating system, the decoated portion comprises decoated segments creating zones where the coating system is still present. Decoated segments can have a width between 15 µm and 150 µm, preferably between 30 µm and 70 µm, and more preferably substantially 50 µm, forming specific designs, such as lines, polygons, hashtag-like, a grid or a like.

Decoated designs can depend on wanted visual aspect and / or desired wavelength transparency for example.

The position of the decoated portion on the multi-glazed window depends on the application.

The multi-glazed window can be flat or curved according to requirements by known methods such as hot or cold bending.

The decoating apparatus can decoat small portion of the whole surface of the coating system. As the radius of curvature is usually enough high to allow to focus on a point of the portion to be decoat and keeping the focus on the whole portion.

Coming back to FIG. 1, the decoating apparatus 10 comprises a laser device **200** to decoat at least partially a portion **25** of a coating system **24** presents on a surface **212** of the multi-glazed window **2.**

It is understood that the decoating apparatus can be used in some embodiments to engrave at least a surface of the multi-glazed window.

The laser device comprises a fixed part **200f,** irremovable in the decoating apparatus in directions paralleled to plane P and along the lateral axis Z meaning that, according to the present invention, the fixed part cannot move inside the decoating apparatus.

The fixed part of the laser device comprises a laser generator **201** to generate a laser beam **202** to minimize movable components of the laser device while reducing the weight of the laser device.

Preferably, the laser generator generates a collimated laser beam to minimize the size and the components of the laser device.

The laser device comprises a mobile part **200m.** The mobile part is able to be displaced inside the decoating apparatus compared to the fixed part. The mobile part comprises a focal lens **15** to produce a focal point **100** of the laser beam **13** at a defined distance **Df** from the focal lens.

To be able to displace the mobile part, the decoating apparatus further comprises a movable means **30** able to move the mobile part substantially along the lateral axis Z meaning that the mobile part can be displaced to move away or closer to the multi-glazed window along parallel to the Z axis to place the focal point at a specific distance and preferably on the portion **25** of a coating system **24.**

Preferably, the mobile part is irremovable along the longitudinal axis X and along the vertical axis Y to be able to move only substantially along parallel to the Z axis.

Preferably, to very fast remove a portion of a coating system, for instance to improve the electromagnetic transmission of a multi-glazed window, the decoating apparatus can comprise an orientation means **12** configured to control the direction of said laser beam. In this way, to decoat a portion is not necessary to use motors to displace the decoating apparatus on the plane P paralleled to the external surface **211** of the multi-glazed-window **2,** the laser beam scans the portion to be decoated thanks to this orientation means. It is not necessarily to displace the decoating apparatus along the plane P for decoating the portion. As the decoating apparatus is fastened to the apparatus, no motor are needed to displace the decoating apparatus along plane P. This conducts to a reduction of the weight of the apparatus. Moreover, as only the laser beam is oriented, the scan of the laser beam on the portion is faster than a displacement on the same portion of the decoating apparatus using motors. Thus, the orientation means is able to rapidly decoat a limited coated portion of a coating system. Thus, the apparatus of the invention can be used to improve the electromagnetic properties of a multi-glazed window already mounted on a stationary object, for instance building, or on a mobile object, for instance a vehicle, a train. Such orientation means allows to decoat a portion of a coating system without moving the decoating apparatus **10** or at least moving the laser device **12** in parallel of the external surface **211** of a multi-glazed window **2** using motors as apparatus of the prior art meaning that the decoating apparatus is lighter and more easily transportable. According to the invention, the decoating apparatus can further comprise an orientation means configured to control the direction of said laser beam, preferably the orientation means comprises at least a rotatable mirror or a mirrors using a galvanometer based motor, a galvo head.

Preferably, the mobile part further comprises an orientation means **12,** preferably a galvo head configured to control the direction, through the focal lens, of said laser beam. The orientation means head comprises more than one mirror to able the laser beam to fast scan the surface to be decoated.

Said mirrors can rotate to orientate the laser beam. Rotation of said mirrors can be done by actuators, mechanical elements or any other elements able to orientate mirrors.

FIG. 2 illustrate an embodiment with a similar general configuration of the decoating apparatus compared to the embodiment illustrated in FIG. 1. This embodiment permits to reduce the size of the decoating apparatus and the parallelepiped rectangle R.

In FIG.2, the mobile part **200m** of the decoating apparatus **10** comprises a first deflecting mirror **205** to deflect the laser beam **202** substantially in the perpendicular direction **202c** to the galvo head. The laser beam **202** is generated by the laser generator **201.** The laser beam is deflected by the first deflecting mirror **205** to enter into the galvo head substantially perpendicular to the Z axis. The galvo head orientates the laser beam **202c** to scan the portion **25** to be at least partially decoated with the oriented laser beam **13.**

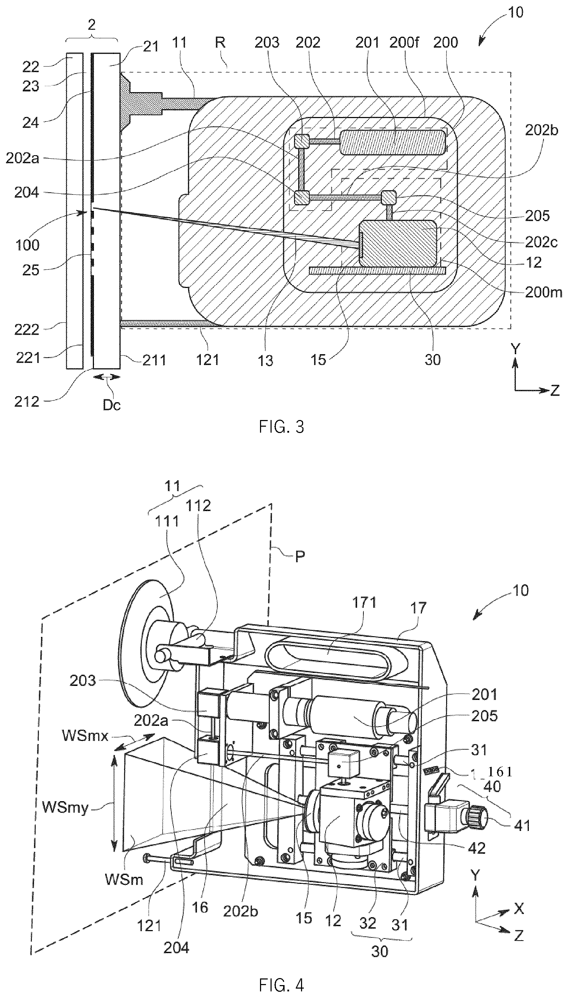

In a preferred embodiment, to minimize dimensions of the decoating apparatus to be more compact compared to embodiments of FIG. 1 and FIG. 2, as illustrated in FIG. 3 and FIG.4, the fixed part **200f** of the laser device further comprises a second **204** and a third **203** deflecting mirrors to deflect the laser beam substantially in the perpendicular direction.

In such embodiment, the laser generator **201** generates a laser beam **202** substantially parallel to the Z axis. The laser beam **202** is deflected by the third **203** and the second **204** deflecting mirrors to be redirected in a substantially paralleled and opposite direction **202b** from the generated direction. The redirected laser beam **202b** enters into the mobile part **200m** of the laser device **200.** Then the first deflecting mirror **205** deflects the laser beam **202b** to enter into the galvo head **12.**

In some embodiments, the second and the third deflecting mirrors are comprised in the fixed part. The movable means by moving away or closer to the multi-glazed window along parallel to the Z axis the mobile part of the laser device, the length of the redirected laser beam **202b** is respectively increased or reduced. Lengths of the part of the laser beam **202, 202a, 202c** keep their respective length even if the mobile part is moving.

In some other embodiments, the second and the third deflecting mirrors are comprised in the mobile part. In such embodiments, only the length of the generated laser beam **202** can be increased or reduced by moving the mobile part.

The decoating apparatus **10** is designed to be transportable to decoat in situ. The decoating apparatus can comprises an handle **171** to facilitate the handling as illustrated in FIG. 4. The decoating apparatus comprises preferably a housing **17** to protect inside such a as the laser device,... The fixed part of the laser device can be screwed or firmly fixed by any other known manner on the housing.

Preferably, the housing is made of metallic-based material or polymeric-based material.

In some embodiments, to facilitate the handling and to facilitate the mounting on the multi-glazed window, the decoating apparatus is inscribed in a compact rectangular parallelepiped allowing to decoat even if the surface of the multi-glazed window is bent

Preferably, the height measured along the Y axis of the decoating apparatus corresponding to the height of the rectangular parallelepiped equals to or is smaller than 500 mm, preferably equals to or is smaller than 450 mm.

Preferably, the length measured along the Z axis of the decoating apparatus corresponding to the length of the rectangular parallelepiped equals to or is smaller than 400 mm, preferably equals to or is smaller than 350 mm

Preferably, the width measured along the X axis of the decoating apparatus corresponding to the width of the rectangular parallelepiped equals to or is smaller than 250 mm, preferably equals to or is smaller than 200 mm.

The weight is preferably less than substantially 20kg and preferably less than substantially 15kg to be easily handled and transported by a single person.

In preferred embodiments as illustrated in FIG. 4, the decoating apparatus has a weight of substantially 13 kg with a height of substantially 420 mm, a width of substantially 150 mm and a length of substantially 300 mm to be easily handled and transported by a single person.

In the embodiment as illustrated in FIG. 4, the mobile part **200m** moves with the movable means **30, 40, 41, 42.**

In some embodiments, easily and precisely move the mobile part without opening the decoating apparatus **10** and / or without touching directly the laser device **12,** the movable means comprises an internal part **30** and an external part **40.**

Preferably, the internal part **30** comprises a plate **32** or like on which the mobile part is placed and a slide **31** to ensure the direction of the movement of the mobile part while keeping the correct trajectory of the laser beam **13.** As shown in FIG. 4, the slide can be in form of bars **31** on which the plate **32** can slide. Thus, the mobile part can move only along bars and substantially along the Z axis.

Preferably, in relation with the internal part and the external part, the movable means can comprises a movable element **42.**

In some embodiments, easily and precisely move the laser device **12** without opening the decoating apparatus **10** and/or without touching directly the laser device **12,** the movable means **40** comprises a movable element **42** and a crank **41** linked to the movable element. The crank is preferably placed outside of the interior of the decoating apparatus **10** to fast interact with the position of the laser device.

In some embodiments, the movable element comprises a screw **42** between the crank **41** and the slide **30** to precisely move the mobile part of the laser device.

Preferably, the external part **40** can comprises a crank **41** linked to the movable element. The crank is placed outside of the interior of the decoating apparatus 10 to fast interact with the position of the laser device without opening the housing and / or manipulating directly the mobile part of the laser device.

In some embodiments, the movable means can comprises a motor to move the mobile part. In such embodiments, the motor is placed inside the decoating apparatus and a interaction means is placed outside the decoating apparatus to activate the motor such as press buttons,...

Preferably, the screw **42** has a defined thread. By turning the screw, the mobile part moves of a defined distance corresponding to the length of the defined thread. In some embodiments, a measurement display can converts the number of rotation made by the screw to display the distance in mm. Once the difference between the distance Df and the distance between the coating system and the focal lens is calculated or at least estimated, This difference correspond to the displacement to be made, from or away of the multi-glazed window depending of the configuration, by the mobile part. The value shown by the measurement display indicates a reference value. The measurement display can show the displacement to arrive to said difference.

In some embodiments, the decoating apparatus **2** can be removed from at least a part of the mounting means **11.**

Preferably, as shown in FIG. 4, the mounting device comprises a suction pad **111,** as the mounting means 11, to mount the decoating apparatus on the surface **211** of the multi-glazed window. Preferably, in some embodiments, to facilitate the handling and to be able to manipulate the calibrated element **50,** the mounting means comprises an hooking and unhooking means **112.** In such embodiments, the suction pad can be mounted on the multi-glazed window and in a second step, the decoating apparatus can be hooked on the suction pad **111** with the hooking and unhooking means **112.**

The plane P is preferably substantially parallel to a surface **211, 212, 221, 222** of the multi-glazed window **2.**The decoating apparatus can comprises a stabilization means **121** to stabilize the decoating apparatus on the multi-glazed window while keeping the parallelism between plane P and a surface of the multi-glazed window.

In some embodiments, a calibrated element **50** can be used between the focal lens **15** and the multi-glazed window **2** to calibrate, to adjust and / or to place the focal point on the portion **25.** The calibrated element can be detachably inserted in front of the focal lens.

The use of a calibrated element **50** between an external surface **211** of a multi-glazed window **2** mounted in situ and a focal lens **15 of** a laser device **12,** comprising a laser beam **13,** of a decoating apparatus **10** mounted on the multi-glazed window allows to calibrate, to adjust and / or to place the focal point of the laser beam on the external surface.

Preferably, the calibrated element comprises a dimensionally stable and stiff rod **53** between the first **51** and the second ends **52.** It means that the longitudinal dimension, the length, of the rod at room temperature cannot change more than 0.5% and more preferably not more than 0.1%. Preferably, the length of the calibrated element cannot change more than 0.1 mm.

The decoating apparatus comprises according to the first aspect of the present invention a measurement display 161 able to display the movement induced by the movable means.

The measurement display can be linked to the direct movement of the laser device or linked to a part of the movable means such as the rotation of the crank, the rotation of the screw or the movement on the slide if such elements exist.

Preferably, the measurement display displays movement in millimeters to be able to know the exact position of the focal point.

The precision of the move is preferably under the 0.1 mm.

In some embodiments, the measurement display can be analogic or digital.

In some embodiments, a reset function can be added to reset the value of the movement of the laser device, for example the index value.

As illustrated in FIG. 4, the laser device can comprises an orientation means **12,** the orientation of the laser beam **13** is represented a pyramidal 3D shape **16.** On the coating system **24,** the pyramidal 3D shape corresponds to a decoating area **25.** Dimensions **WSmx, WSmy** of such decoating area **25** is preferably from 5 cm to 25 cm and more preferably from 10 cm to 15 cm.

As illustrated in FIG. 4, in order to reduce the size of the decoating area **25,** the decoating apparatus can comprises a closing means **14.** Such closing means blocks parts of the scan of the laser beam. The decoating area **25** on the coating system **24** is reduced from a maximum area **WSm** to a reduced area.

Because laser beam can be dangerous for human, instead of preventing people from approaching or block the space, the decoating apparatus **10** can comprises a opaque to such laser beam **13** skirt between the external surface and the decoating apparatus at least around the mouth in which the laser beam comes out.

According to the invention, the decoating apparatus can be mounted in front of the portion **25** to be decoated. Then, the portion **25** is least partially decoated with the laser beam. At the end of the decoating step, the decoating apparatus can be unmounted.

An embodiment provides a method comprising the following steps (A) Mounting the decoating apparatus in front of the portion to be decoated; then (B) at least partially decoating the portion to be decoat with the laser beam and then (C) unmounting the decoating apparatus.

Preferably, before the decoating step (B), the focal point is calibrated on the coating system to be sure that the focal point is on the coating system. This calibration step means that the mobile part is displaced to place the focal point on the coating system.

In some embodiments, when several portions to be decoated exist, meaning that the multi-glazed window comprises different zones where a portion of the coating system needed to be at least partially decoated, the method is repeated for each zones meaning that the decoating apparatus is mounted in front of a first portion, this first portion is at least partially decoated and the decoating apparatus is unmounted, then the decoating apparatus is mounted in front of a second portion to be decoated, this second portion is at least partially decoated and the decoating apparatus is unmounted and so on. Preferably, before the decoating step the mobile part is displaced to calibrate the focal point on the coating system.

In some embodiments, the calibration step can be made before the first decoating portion only. Some recalibration can be made after some decoating steps to ensure that the focal point in still on the coating system.

In some embodiments, when the multi-glazed window comprises more than one coating systems, the decoating apparatus is mounted in front of the portion to be decoated, then the first coating system that will be at least partially decoated by the method is the furthest coating and so on. Before each decoating step, the mobile part is displaced to place the focal point on the coating system to be at least partially decoated.

## Claims

1. Decoating apparatus (10), inscribed in a parallelepiped rectangle R defined by a longitudinal axis, X, a vertical axis, Y defining a plane P and a lateral axis, Z, comprising
- a mounting means (11) to mount the decoating apparatus on a window (2), preferably a multi-glazed window, mounted in situ;
- a laser device (200) to decoat at least partially a portion (25) of a coating system (24) presents on a surface (212) of the window;
**characterised in that**:
the laser device comprises a fixed part (200f), irremovable in the decoating apparatus in directions paralleled to plane P and along the lateral axis Z, comprising a laser generator (201) to generate a laser beam (13, 202, 202a, 202b, 202c), and a mobile part (200m) comprising a focal lens (15) to produce a focal point (100) of the laser beam at a defined distance Df from the focal lens, wherein the fixed part (200f) cannot move inside the decoating apparatus (10); **in that** the decoating apparatus further comprises a movable means (30, 40, 41, 42) able to move the mobile part substantially along the lateral axis Z; **in that** the mobile part (200m) further comprises a galvo head (12) configured to control the direction of said laser beam; **in that** the mobile part (200m) comprises a first deflecting mirror (205) to deflect the laser beam substantially in the perpendicular direction to the galvo head (12); **in that** the laser device (200) comprises a second deflecting mirror (204) to deflect the laser beam substantially in the perpendicular direction; **in that** the second deflecting mirror is comprised in the fixed part (200f) and **in that** the decoating apparatus (10) further comprises a measurement display able to display the movement induced by the movable means (30, 40, 41, 42).

2. Decoating apparatus according to claim 1, wherein the laser generator generates a collimated laser beam.

3. Decoating apparatus according to any preceding claims, wherein the mobile part is irremovable along the longitudinal axis X and along the vertical axis Y.

4. Decoating apparatus according to claim 1, wherein the laser device comprises a third deflecting mirror (203) to deflect the laser beam substantially in the perpendicular direction.

5. Decoating apparatus according to claim 4, wherein the second and the third deflecting mirrors are comprised in the fixed part.

6. Method to decoat at least partially a portion (25) of a coating system (25) present on a surface (212) of a window (2), preferably a multi-glazed window, mounted in situ by a decoating apparatus according to any preceding claims; the method comprises following steps :
A. Mounting the decoating apparatus in front of the portion (25) to be decoated;
B. At least partially decoating the portion (25) to be decoated with the laser beam;
C. Unmounting the decoating apparatus.

## Patentansprüche

1. Entschichtungseinrichtung (10), die in ein Parallelepiped-Rechteck R graviert ist, das durch eine Längsachse, X, eine vertikale Achse, Y, die eine Ebene P definiert, und eine laterale Achse, Z, definiert ist, umfassend
- ein Montagemittel (11) zum Montieren der Entschichtungseinrichtung an einem Fenster (2), vorzugsweise einem mehrfachverglasten Fenster, das in situ montiert wird;
- eine Laservorrichtung (200) zum zumindest teilweisen Entschichten eines Abschnitts (25) eines Beschichtungssystems (24), das auf einer Oberfläche (212) des Fensters vorhanden ist;
**dadurch gekennzeichnet, dass**
die Laservorrichtung ein fixiertes Teil (200f) umfasst, das in der Entschichtungseinrichtung in Richtungen parallel zur Ebene P und entlang der lateralen Achse Z nicht entfernbar ist, umfassend einen Lasergenerator (201) zum Generieren eines Laserstrahls (13, 202, 202a, 202b, 202c), und
ein mobiles Teil (200m), das eine Brennlinse (15) umfasst, um einen Brennpunkt (100) des Laserstrahls in einem definierten Abstand Df von der Brennlinse zu erzeugen, wobei sich das fixierte Teil (200f) nicht innerhalb der Entschichtungseinrichtung (10) bewegen kann; dadurch, dass die Entschichtungseinrichtung ferner ein bewegliches Mittel (30, 40, 41, 42) umfasst, das in der Lage ist, das mobile Teil im Wesentlichen entlang der lateralen Achse Z zu bewegen; dadurch, dass das mobile Teil (200m) ferner einen Galvokopf (12) umfasst, der dazu ausgelegt ist, die Richtung des Laserstrahls zu steuern; dadurch, dass das mobile Teil (200m) einen ersten Ablenkspiegel (205) umfasst, um den Laserstrahl im Wesentlichen in der senkrechten Richtung zu dem Galvokopf (12) abzulenken; dadurch, dass die Laservorrichtung (200) einen zweiten Ablenkspiegel (204) umfasst, um den Laserstrahl im Wesentlichen in der senkrechten Richtung abzulenken; dadurch, dass der zweite Ablenkspiegel in dem fixierten Teil (200f) enthalten ist, und dadurch, dass die Entschichtungseinrichtung (10) ferner eine Messanzeige umfasst, die in der Lage ist, die durch das bewegliche Mittel (30, 40, 41, 42) induzierte Bewegung anzuzeigen.

2. Entschichtungseinrichtung nach Anspruch 1, wobei der Lasergenerator einen kollimierten Laserstrahl generiert.

3. Entschichtungseinrichtung nach einem der vorhergehenden Ansprüche, wobei das mobile Teil entlang der Längsachse X und entlang der vertikalen Achse Y nicht entfernbar ist.

4. Entschichtungseinrichtung nach Anspruch 1, wobei die Laservorrichtung einen dritten Ablenkspiegel (203) umfasst, um den Laserstrahl im Wesentlichen in der senkrechten Richtung abzulenken.

5. Entschichtungseinrichtung nach Anspruch 4, wobei der zweite und der dritte Ablenkspiegel in dem fixierten Teil enthalten sind.

6. Verfahren zum zumindest teilweisen Entschichten eines Abschnitts (25) eines Beschichtungssystems (25), das auf einer Oberfläche (212) eines Fensters (2), vorzugsweise eines mehrfachverglasten Fensters, vorhanden ist, das in situ montiert wird, durch eine Entschichtungseinrichtung nach einem der vorhergehenden Ansprüche; wobei das Verfahren die folgenden Schritte umfasst:
A. Montieren der Entschichtungseinrichtung vor dem zu entschichtenden Abschnitt (25);
B. zumindest teilweises Entschichten des mit dem Laserstrahl zu entschichtenden Abschnitts (25);
C. Demontieren der Entschichtungseinrichtung.

## Revendications

1. Appareil d'élimination de revêtement (10), inscrit dans un rectangle parallélépipédique R défini par un axe longitudinal, X, un axe vertical, Y, définissant un plan P et un axe latéral, Z, comprenant
- un moyen de montage (11) pour monter l'appareil d'élimination de revêtement sur une fenêtre (2), de préférence une fenêtre à vitrages multiples, montée sur place ;
- un dispositif laser (200) pour éliminer un revêtement au moins partiellement d'une portion (25) d'un système de revêtement (24) présent sur une surface (212) de la fenêtre ;
**caractérisé en ce que** :
le dispositif laser comprend une partie fixe (200f), inamovible dans l'appareil d'élimination de revêtement dans des directions parallèles au plan P et le long de l'axe latéral Z, comprenant un générateur laser (201) pour générer un faisceau laser (13, 202, 202a, 202b, 202c), et
une partie mobile (200m) comprenant une lentille focale (15) pour produire un point focal (100) du faisceau laser à une distance définie Df par rapport à la lentille focale, dans lequel la partie fixe (200f) ne peut pas se mouvoir à l'intérieur de l'appareil d'élimination de revêtement (10) ; **en ce que** l'appareil d'élimination de revêtement comprend en outre un moyen mobile (30, 40, 41, 42) capable de mouvoir la partie mobile sensiblement le long de l'axe latéral Z ; **en ce que** la partie mobile (200m) comprend en outre une tête galvanométrique (12) configurée pour commander la direction dudit faisceau laser ; **en ce que** la partie mobile (200m) comprend un premier miroir déflecteur (205) pour effectuer la déflexion du faisceau laser sensiblement dans la direction perpendiculaire à la tête galvanométrique (12) ; **en ce que** le dispositif laser (200) comprend un deuxième miroir déflecteur (204) pour effectuer la déflexion du faisceau laser sensiblement dans la direction perpendiculaire ; **en ce que** le deuxième miroir déflecteur est compris dans la partie fixe (200f) et **en ce que** l'appareil d'élimination de revêtement (10) comprend en outre une unité d'affichage de mesure capable d'afficher le mouvement provoqué par le moyen mobile (30, 40, 41, 42).

2. Appareil d'élimination de revêtement selon la revendication 1, dans lequel le générateur laser génère un faisceau laser collimaté.

3. Appareil d'élimination de revêtement selon de quelconques revendications précédentes, dans lequel la partie mobile est inamovible le long de l'axe longitudinal X et le long de l'axe vertical Y.

4. Appareil d'élimination de revêtement selon la revendication 1, dans lequel le dispositif laser comprend un troisième miroir déflecteur (203) pour effectuer la déflexion du faisceau laser sensiblement dans la direction perpendiculaire.

5. Appareil d'élimination de revêtement selon la revendication 4, dans lequel les deuxième et troisième miroirs déflecteurs sont compris dans la partie fixe.

6. Procédé pour éliminer un revêtement au moins partiellement d'une portion (25) d'un système de revêtement (25) présent sur une surface (212) d'une fenêtre (2), de préférence une fenêtre à vitrages multiples, montée sur place, par un appareil d'élimination de revêtement selon de quelconques revendications précédentes ; le procédé comprend les étapes suivantes :
A. le montage de l'appareil d'élimination de revêtement devant la portion (25) dont le revêtement doit être éliminé ;
B. l'élimination au moins partielle du revêtement de la portion (25) dont le revêtement doit être éliminé avec le faisceau laser ;
C. le démontage de l'appareil d'élimination de revêtement.
